# EUROPÄISCHE PATENTANMELDUNG

(11) **EP 3 889 531 A1**
(43) Veröffentlichungstag der Anmeldung: **06.10.2021**
(21) Anmeldenummer: 20167232.6
(22) Anmeldetag: 31.03.2020
(51) Int. Cl.: F27B 3/08, F27B 3/28, F27D 11/10, F27D 19/00, H05B 7/109

(54) **VERFAHREN UND SYSTEM ZUM KOMPENSIEREN DES ABBRANDS EINER ELEKTRODE IN EINEM LICHTBOGENOFEN**

(71) Anmelder: Primetals Technologies Germany GmbH, 91058 Erlangen (DE)
(72) Erfinder: Koeger, Thierry, 67310 Hohengoeft (FR); Huber, Jürgen, 77723 Gengenbach (DE); Mueller, Alexander, 77652 Offenburg (DE)
(74) Vertreter: Metals@Linz

(57) **Zusammenfassung**

Die vorliegende Erfindung betrifft ein Verfahren (100) und ein System (1) zum Kompensieren des Abbrands einer Elektrode (2) in einem Lichtbogenofen (3). Dabei wird zumindest ein Teil der von einer Haltevorrichtung (4) an einer ersten Halteposition (H1) gehaltenen Elektrode (2) mithilfe einer Sensorvorrichtung (5) erfasst (S1) und eine zweite Halteposition (H2) auf Grundlage von beim Erfassen erzeugten Daten ermittelt (S2). Die Haltevorrichtung (4) kann daraufhin relativ zur Elektrode (2) von der ersten Halteposition (H1) an die ermittelte zweite Halteposition (H2) umpositioniert werden (S4).

## Beschreibung

Die vorliegende Erfindung betrifft ein Verfahren und ein System zum Kompensieren des Abbrands einer Elektrode in einem Lichtbogenofen.

In Lichtbogenöfen (Electric Arc Furnace, EAF) werden stromdurchflossene Elektroden eingesetzt, um Schmelzgut wie zum Beispiel Stahlschrott zu erhitzen, insbesondere einzuschmelzen. Zu diesem Zweck wird das Schmelzgut in ein Gefäß verbracht, wo die üblicherweise vertikal ausgerichteten Elektroden zumindest mit ihrem unteren Elektrodenende dann in das Schmelzgut eingeführt werden können.

Beim Einschmelzen unterliegen die Elektroden einem Verschleiß, dem sogenannten Abbrand. Durch die zwischen den Elektroden und dem Schmelzgut erzeugten Lichtbögen wird Material im Bereich der unteren Elektrodenenden abgetragen, sodass sich die Elektroden im laufenden Betrieb effektiv verkürzen.

Aus diesem Grund sind die Elektroden üblicherweise segmentiert aufgebaut, sodass bei Bedarf, d. h. bei starker Verkürzung, zusätzliche Elektrodensegmente an oberen Elektrodenenden hinzugefügt, zum Beispiel mit diesen verschraubt, werden können. Zudem ist es notwendig, dass die Aufhängung der Elektroden, z. B. über eine Haltevorrichtung, derart angepasst wird, dass die Elektroden weiterhin zumindest teilweise in das Schmelzgut eingeführt werden können.

Es ist eine Aufgabe der vorliegenden Erfindung, einen verbesserten Betrieb von Lichtbogenöfen zu ermöglichen, insbesondere Effizienz und/oder Sicherheit eines solchen Betriebs zu erhöhen.

Diese Aufgabe wird gelöst durch ein Verfahren und ein System zum Kompensieren des Abbrands einer Elektrode in einem Lichtbogenofen gemäß den unabhängigen Ansprüchen.

Ein Verfahren zum Kompensieren des Abbrands einer Elektrode in einem Lichtbogenofen gemäß einem ersten Aspekt der Erfindung weist die folgenden Schritte auf: (i) Erfassen zumindest eines Teils der von einer Haltevorrichtung an einer ersten Halteposition, insbesondere vertikal, gehaltenen Elektrode mithilfe einer Sensorvorrichtung; (ii) Ermitteln einer zweiten Halteposition auf Grundlage von beim Erfassen erzeugten Daten; und (iii) Umpositionieren der Haltevorrichtung relativ zur Elektrode von der ersten Halteposition an die ermittelte zweite Halteposition.

Ein Erfassen eines Teils einer Elektrode im Sinne der Erfindung ist vorzugsweise ein (sensorisches) Aufnehmen, Abtasten bzw. Scannen und/oder dergleichen des Elektrodenteils. Bei diesem Erfassen können beispielsweise Eigenschaften der Elektrode und gegebenenfalls auch der die Elektrode haltenden Haltevorrichtung, insbesondere deren Form und/oder Kontur, erfasst und gegebenenfalls, zum Beispiel durch beim Erfassen erzeugte (Sensor-)Daten, abgebildet werden.

Ein Umpositionieren im Sinne der Erfindung ist vorzugsweise eine Änderung der Orientierung und/oder Lage der Haltevorrichtung, insbesondere relativ zu einer Elektrode. Ein Umpositionieren kann beispielsweise einem Bewegen, insbesondere einem Verfahren, der Haltevorrichtung relativ zu einer Elektrode entsprechen. Dies kann voraussetzen, dass die Elektrode beim Umpositionieren nicht von der Haltevorrichtung gehalten wird.

Ein Aspekt der Erfindung basiert auf dem Ansatz, dass eine Haltevorrichtung zum Halten einer Elektrode automatisch, gegebenenfalls zyklisch, relativ zur Elektrode umpositioniert wird, d. h. auf einer Automatisierung des Umpositionierens. Das Umpositionieren kann z. B. vor oder nach einer Feststellung einer substantiellen Verkürzung der Gesamtlänge der Elektrode vorgesehen sein bzw. erfolgen. Zu diesem Zweck wird vorzugsweise zumindest ein Teil der von der Haltevorrichtung an einer ersten Halteposition gehaltenen Elektrode sensorisch erfasst, um eine zweite Halteposition zu ermitteln, an der die Haltevorrichtung dann (automatisch) positioniert werden kann. Beispielsweise kann beim Erfassen ein Teil der Elektrode mithilfe einer Sensorvorrichtung abgetastet bzw. gescannt werden, um mögliche neue Haltepositionen zu finden. Auf der Grundlage von dabei erzeugten Daten kann aus diesen dann gegebenenfalls eine zweite Halteposition ausgewählt werden.

Durch das sensorische Erfassen kann dabei zum Beispiel überprüft werden, ob die Elektrode überhaupt noch lang genug ist, um in einer anderen als der gegenwärtigen ersten Halteposition gehalten zu werden. Alternativ oder zusätzlich kann durch das sensorische Erfassen sichergestellt werden, dass die zweite Halteposition in einem Abschnitt der Elektrode liegt, der zum Halten überhaupt geeignet ist, z. B. nicht im Bereich einer Verbindungsstelle von zwei Elektrodensegmenten liegt. Dadurch, dass die zweite Halteposition vorzugsweise auf der Grundlage von beim Erfassen erzeugten Daten, insbesondere automatisch, ermittelt wird, können auch Bedienungsfehler, die bei einem manuellen Umpositionieren auftreten können, zumindest weitestgehend ausgeschlossen werden.

Zum Umpositionieren mithilfe der Haltevorrichtung kann die Elektrode beispielsweise auf einer vorzugsweise tischartig ausgebildeten Abstützvorrichtung abgestützt und die Haltevorrichtung dann, insbesondere nach Lockerung einer Klemm- oder Greifeinheit, etwa einer Spannbacke, der Haltevorrichtung relativ zur abgestützten Elektrode bis zur zweiten Halteposition verfahren werden.

Vorzugsweise umfasst das Umpositionieren der Haltevorrichtung dabei nicht nur eine Lockerung oder zumindest teilweise Öffnung der Klemm- oder Greifeinheit, sondern auch ein abschließendes Schließen bzw. Festziehen der Klemm- oder Greifeinheit. Durch das abschließende Schließen bzw. Festziehen kann die Elektrode dann an der zweiten Halteposition gehalten werden.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform wird auf Grundlage der beim Erfassen erzeugten Daten ein erster, insbesondere vertikaler, Abstand zwischen einem oberen Elektrodenende und einer an der Elektrode angebrachten Markierung ermittelt und dem Ermitteln der zweiten Halteposition zugrunde gelegt. Ein oberes Elektrodenende ist hierbei vorzugsweise ein zweites Ende der insbesondere zylinderförmig ausgebildeten Elektrode, welches einem unteren, ersten Ende der Elektrode, an dem der Abbrand auftritt, gegenüberliegt. Anhand des ermittelten ersten Abstands kann beispielsweise beurteilt werden, ob zwischen der Markierung und dem oberen Elektrodenende noch ausreichend Platz zum Halten der Elektrode vorhanden ist. Mit anderen Worten kann beurteilt werden, ob die Elektrode überhaupt noch über eine ausreichende Restlänge verfügt, sodass ein Halten an einer zweiten Halteposition möglich ist.

Die Markierung ist dabei vorzugsweise derart ausgebildet, dass sie von der Sensorvorrichtung erfassbar, insbesondere optisch, ist. Die Markierung kann beispielsweise als Anstrich, eine oder mehrere Kerben oder ähnliches ausgebildet sein. Es ist auch denkbar, dass die Markierung durch ein Bauteil, etwa eine Schelle, gebildet ist, die zum Ermitteln der zweiten Halteposition an der Elektrode befestigt ist. Dadurch kann ein Benutzer Einfluss auf die Ermittlung der zweiten Halteposition nehmen.

Die Markierung kann dabei auch von der Haltevorrichtung gebildet werden, welche die Elektrode an der ersten Halteposition hält. Da die Lage der Haltevorrichtung relativ zur Elektrode zunächst mit der ersten Halteposition korrespondiert, wird in dieser bevorzugten Ausführungsform auf Grundlage der beim Erfassen erzeugten Daten der erste, insbesondere vertikale, Abstand zwischen dem oberen Elektrodenende und der ersten Halteposition ermittelt und dem Ermitteln der zweiten Halteposition zugrunde gelegt. So kann z. B. zuverlässig eine zweite Halteposition gewählt werden, die zwischen der ersten (gegenwärtigen) Halteposition und dem oberen Elektrodenende liegt.

In einer weiteren bevorzugten Ausführungsform enthalten die beim Erfassen erzeugten Daten ein Profil eines horizontalen Abstands zwischen der Elektrode und/oder der Haltevorrichtung einerseits und der Sensorvorrichtung andererseits, welches auch als Abstandsprofil bezeichnet werden kann. Vorzugsweise wird die zweite Halteposition auf Grundlage dieses Abstandsprofils ermittelt. Insbesondere kann aus dem Abstandsprofil der erste, insbesondere vertikale, Abstand zwischen dem oberen Elektrodenende und der ersten Halteposition abgeleitet werden, welcher dann dem Ermitteln der zweiten Halteposition zugrunde gelegt wird. Anhand des Abstandsprofils kann die räumliche Lage der ersten Halteposition relativ zum oberen Elektrodenende besonders leicht bestimmt werden.

Das Abstandsprofil bildet dabei in bevorzugter Weise den axialen, d. h. parallel zu einer Längsachse der Elektrode verlaufenden, Oberflächenverlauf der Elektrode vom oberen Elektrodenende in Richtung der ersten Halteposition ab. Mit anderen Worten kann das Abstandsprofil zumindest teilweise eine Silhouette bzw. Kontur der Elektrode und vorzugsweise auch zumindest eines Teils der Haltevorrichtung abbilden.

Wird der horizontale Abstand beispielsweise über das obere Elektrodenende hinaus erfasst, zeigt das Abstandsprofil am oberen Elektrodenende beispielsweise eine abrupte und signifikante Zunahme des gemessenen horizontalen Abstands zur Sensorvorrichtung. Eine Abnahme des gemessenen horizontalen Abstands tritt dagegen z. B. im Bereich der ersten Halteposition auf, wo die Elektrode von der Haltevorrichtung gehalten wird. Diese "Kanten" im Abstandsprofil können Anhaltspunkte für die Lage des oberen Elektrodenendes und der ersten Halteposition bilden.

In einer weiteren bevorzugten Ausführungsform wird die zweite Halteposition auf Grundlage einer vorgegebenen Verbindungsposition, an der zwei Segmente der Elektrode miteinander verbunden sind, ermittelt. Da ein Halten der Elektrode an oder zumindest in der unmittelbaren Umgebung einer solchen Verbindungsposition eine Beschädigung der Elektrodensegmente bzw. der Segmentverbindung zur Folge haben könnte, kann durch die Berücksichtigung der vorgegebenen Verbindungsposition die Betriebssicherheit erhöht oder zumindest sichergestellt werden.

Beispielsweise kann auf Grundlage der vorgegebenen Verbindungsposition, insbesondere eines mit der vorgegebenen Verbindungsposition korrespondierenden Verbindungsbereichs, ein verbleibender Restabschnitt, in dem die Elektrode gehalten werden kann, ermittelt werden. So kann beispielsweise festgestellt werden, dass die Haltevorrichtung um eine Mindestlänge axial, d. h. in Richtung einer Längsachse der Elektrode, relativ zur Elektrode verschoben werden muss, um zu vermeiden, dass die Elektrode an einer unmittelbar oberhalb der Haltevorrichtung liegenden Segmentverbindung gehalten wird. Mit anderen Worten kann sichergestellt werden, dass die zweite Halteposition nicht mit einer vorgegebenen Verbindungsposition überlappt bzw. in einem damit korrespondierenden Verbindungsbereich liegt.

In einer weiteren bevorzugten Ausführungsform wird anhand eines Drucksignals verifiziert, dass die Elektrode auf einer, insbesondere tischartig ausgebildeten, Abstützvorrichtung abgestützt ist, bevor die Haltevorrichtung von der ersten Halteposition an die zweite Halteposition umpositioniert wird. Dadurch kann insbesondere sichergestellt werden, dass ein aktives Umpositionieren der Haltevorrichtung gefahrlos möglich ist.

Zu diesem Zweck kann die Haltevorrichtung, insbesondere eine Hubeinheit der Haltevorrichtung, eine Drucksensorik zum Erfassen eines Drucks, insbesondere eines Hydraulikdrucks, aufweisen, welche zum Ausgeben des Drucksignals eingerichtet ist. Ein Hydraulikdruck ist hierbei als Druck in einem Hydraulikmedium einer Hydraulik zu verstehen, welche zum Positionieren der Haltevorrichtung, insbesondere zum Heben und Senken der Klemm- bzw. Greifeinheit der Haltevorrichtung, eingerichtet ist. Beim Abstützen der Elektrode auf der Abstützvorrichtung sinkt das von der Hydraulik zu tragende Gewicht, wodurch sich der Hydraulikdruck absenkt. Dieser Druckabfall kann von der Drucksensorik erfasst und ein damit korrespondierendes Drucksignal entsprechend ausgegeben werden.

Beispielsweise kann die Elektrode mithilfe der Haltevorrichtung oberhalb der Abstützvorrichtung positioniert und dann abgesenkt werden, bis das untere Elektrodenende die Abstützvorrichtung kontaktiert und somit die Drucksensorik ein Drucksignal erzeugt. Alternativ kann die Elektrode mithilfe der Haltevorrichtung oberhalb der Abstützvorrichtung positioniert und die Abstützvorrichtung dann angehoben werden, bis das untere Elektrodenende die Abstützvorrichtung kontaktiert und somit die Drucksensorik ein Drucksignal erzeugt.

In einer weiteren bevorzugten Ausführungsform wird auf Grundlage der beim Erfassen erzeugten Daten, insbesondere auf Grundlage des ermittelten ersten, insbesondere vertikalen, Abstands zwischen dem oberen Elektrodenende und der ersten Halteposition, eine Restlänge der Elektrode ermittelt und ausgegeben. Unter einer Restlänge kann hierbei die restliche Gesamtlänge der Elektrode verstanden werden. Dadurch kann zum Beispiel festgestellt werden, wann es notwendig ist, ein weiteres Elektrodensegment aufzusetzen, um den fortlaufenden Betrieb des Lichtbogenofens sicherzustellen. Insbesondere kann so zuverlässig abgeschätzt werden, wie oft ein Umpositionieren der Haltevorrichtung relativ zur Elektrode noch möglich ist, bevor ein weiteres Elektrodensegment aufgesetzt werden muss.

In einer weiteren bevorzugten Ausführungsform wird die Restlänge auf Grundlage eines zweiten, insbesondere vertikalen, Abstands zwischen der ersten Halteposition und der Abstützvorrichtung ermittelt. Zu diesem Zweck können sowohl die Haltevorrichtung als auch die Abstützvorrichtung einen Positionsencoder aufweisen, mit dem ein vertikaler Abstand der Haltevorrichtung, insbesondere der Greifeinheit, bzw. der Abstützvorrichtung zu einer Referenzposition, beispielsweise einem Boden, ermittelbar ist. Aus der Differenz dieser vertikalen Abstände zu einer Referenzposition ergibt sich dann der zweite Abstand zwischen der ersten Halteposition und der Abstützvorrichtung. Zu diesem zweiten Abstand kann der erste Abstand zwischen dem oberen Elektrodenende und der ersten Halteposition addiert werden, wodurch sich die verbleibende Restlänge der Elektrode ergibt. Somit kann die Restlänge der Elektrode besonders präzise ermittelt werden.

In einer weiteren bevorzugten Ausführungsform wird die ermittelte Restlänge nach jedem Schmelzzyklus im Lichtbogenofen geprüft und die zweite Halteposition in Abhängigkeit eines Ergebnisses der Prüfung ermittelt. Es kann hierbei insbesondere geprüft werden, ob die ermittelte Restlänge einen vorgegebenen Mindestlängenschwellwert erreicht oder unterschreitet. Bevor die zweite Halteposition ermittelt wird, kann somit z. B. entschieden werden, ob zum Beispiel das Aufsetzen eines weiteren Elektrodensegments auf das obere Elektrodenende notwendig ist. Gegebenenfalls kann die sich dadurch ergebende neue Elektrodenlänge beim Ermitteln der zweiten Halteposition berücksichtigt werden.

In einer weiteren bevorzugten Ausführungsform wird die Elektrode zum Erfassen zumindest eines Teils der Elektrode mithilfe der Haltevorrichtung vertikal, d. h. in eine Richtung parallel zur ihrer Längsachse, verfahren. Insbesondere kann die Elektrode mithilfe der Haltevorrichtung relativ zur Sensorvorrichtung verfahren werden. Dies erlaubt eine ortsfeste Montage der Sensorvorrichtung und damit das Einsparen einer separaten Hubeinrichtung für die Sensorvorrichtung.

Das Verfahren der Elektrode ermöglicht dabei eine besonders präzise Erfassung des horizontalen Abstands zwischen der Elektrode und der Sensorvorrichtung. Beim Verfahren der Elektrode relativ zur Sensorvorrichtung kann daher das Abstandsprofil erzeugt werden.

In einer weiteren bevorzugten Ausführungsform wird die Sensorvorrichtung zum Erfassen zumindest eines Teils der Elektrode mithilfe der Abstützvorrichtung vertikal, d. h. in einer Richtung parallel zur Längsachse der Elektrode, verfahren. Zu diesem Zweck kann die Abstützvorrichtung eine Hubeinrichtung aufweisen. Dadurch kann zumindest ein Teil der Elektrode erfasst werden, während die Elektrode auf der Abstützvorrichtung abgestützt ist. Dies ermöglicht eine weitere Erhöhung der Betriebssicherheit.

In einer weiteren bevorzugten Ausführungsform wird zumindest ein Teil der Elektrode mehrmals hintereinander erfasst und die zweite Halteposition auf Grundlage einer Mittelung der dabei jeweils erzeugten Daten ermittelt. Insbesondere kann die zweite Halteposition auf Grundlage eines gemittelten Abstandprofils ermittelt werden. Ist die Sensorvorrichtung beispielsweise als Laserscanner ausgebildet bzw. weist ein Verschwenkmittel zum Verschwenken eines Laserstrahls auf, kann zumindest ein Teil der Elektrode 2 bis 16-mal, vorzugsweise 4 bis 12-mal, insbesondere im Wesentlichen 8-mal erfasst werden. Dies ermöglicht die Reduzierung des Einflusses von Rauschen oder von vereinzelt auftretenden Artefakten in den beim Erfassen erzeugten Daten. Die zweite Halteposition kann dadurch besonders zuverlässig und präzise bestimmt werden.

In einer weiteren bevorzugten Ausführungsform wird beim Erfassen zumindest eines Teils der Elektrode ein Maß für die Verlässlichkeit der beim Erfassen erzeugten Daten ermittelt. Beispielsweise kann auf Grundlage einer mithilfe einer optischen Sensorvorrichtung erfassten Intensität eines Sensorsignals, etwa eines Laserstrahls, abgeschätzt werden, wie hoch eine Aerosolkonzentration, zum Beispiel der Staub- und/oder Wasseranteil, in der Luft ist. Erreicht oder unterschreitet das Maß für die Verlässlichkeit einen vorgegebenen Verlässlichkeitsschwellenwert, kann der Erfassungsvorgang abgebrochen und/oder ein entsprechendes Warnsignal ausgegeben werden.

In einer weiteren bevorzugten Ausführungsform weist die Sensorvorrichtung eine Kamera oder einen Lasersensor auf, mit der bzw. dem zumindest ein Teil der Elektrode erfasst wird. Mithilfe der Kamera kann z. B. ein einzelnes Bild oder eine Bildfolge von zumindest einem Teil der Elektrode aufgenommen und aus dem Bild oder der Bildfolge, etwa mithilfe eines Algorithmus zur digitalen Bildverarbeitung, insbesondere zur Merkmalserkennung, zum Beispiel der erste Abstand zwischen dem oberen Elektrodenende und der ersten Halteposition ermittelt werden. Mithilfe des Lasersensors erzeugte Daten können dagegen einen horizontalen Abstand charakterisieren. Z. B. durch Bewegung des Lasersensors relativ zur Elektrode bzw. der Haltevorrichtung lässt sich so ein Verlauf des horizontalen Abstands zwischen der Elektrode und dem Lasersensor entlang der Längsrichtung der Elektrode, d. h. das Abstandsprofil, ermitteln und daraus wiederum der erste Abstand zwischen dem oberen Elektrodenende und der ersten Halteposition ableiten. Während die Kamera gegebenenfalls auch für andere Aufgaben einsetzbar ist, etwa zur Dokumentation des Betriebs, zur Bedienerunterstützung insbesondere beim Beladen des Lichtbogenofens, beim Positionieren der Elektrode und/oder dergleichen, und damit eine besonders flexible bzw. effiziente Lösung darstellt, kann der Lasersensor besonders präzise Ergebnisse liefern und ist darüber hinaus unempfindlicher gegenüber Verschmutzung.

In einer weiteren bevorzugten Ausführungsform wird mithilfe der Haltevorrichtung eine Anzahl an mehreren Elektroden gehalten. Vorzugsweise weist die Sensorvorrichtung eine entsprechende Anzahl an Lasersensoren auf, mit denen jeweils zumindest ein Teil einer der Elektroden erfasst wird. Mit anderen Worten kann pro Elektrode ein Lasersensor vorgesehen sein, der zum Beispiel auf die jeweilige Elektrode ausgerichtet ist. Dadurch kann zumindest ein Teil jeder Elektrode besonders präzise erfasst werden.

Alternativ ist es auch möglich, nur einen Lasersensor vorzusehen, der beispielsweise verschwenkbar oder linear verfahrbar gelagert und dadurch auf die mehreren Elektroden ausrichtbar ist. Dadurch können Bauteile eingespart und die Anlagenkomplexität verringert werden.

Ein System zum Kompensieren des Abbrands einer Elektrode in einem Lichtbogenofen weist gemäß einem zweiten Aspekt der Erfindung auf: (i) eine Haltevorrichtung, die dazu eingerichtet ist, eine Elektrode an einer ersten Halteposition, insbesondere vertikal, zu halten; (ii) eine Sensorvorrichtung, die dazu eingerichtet ist, zumindest einen Teil der gehaltenen Elektrode zu erfassen; (iii) eine Verarbeitungsvorrichtung, die dazu eingerichtet ist, auf Grundlage von beim Erfassen erzeugter Daten eine zweite Halteposition zu ermitteln; und (iv) eine Steuerungsvorrichtung, die dazu eingerichtet ist, ein Umpositionieren der Haltevorrichtung relativ zur Elektrode von der ersten Halteposition an die ermittelte zweite Halteposition zu veranlassen.

Es zeigen, zumindest teilweise schematisch:
- FIG 1: ein Beispiel eines Systems zum Kompensieren des Ab-brands von drei Elektroden in einem Lichtbogenofen in einer Draufsicht;
- FIG 2: ein Beispiel eines Systems zum Kompensieren des Ab-brands einer Elektrode in einem Lichtbogenofen in einer Seitenansicht;
- FIG 3: ein Beispiel eines Profils des horizontalen Abstands zwischen einer Elektrode und einer Sensorvorrichtung; und
- FIG 4: ein Beispiel eines Verfahrens zum Kompensieren des Abbrands einer Elektrode in einem Lichtbogenofen.

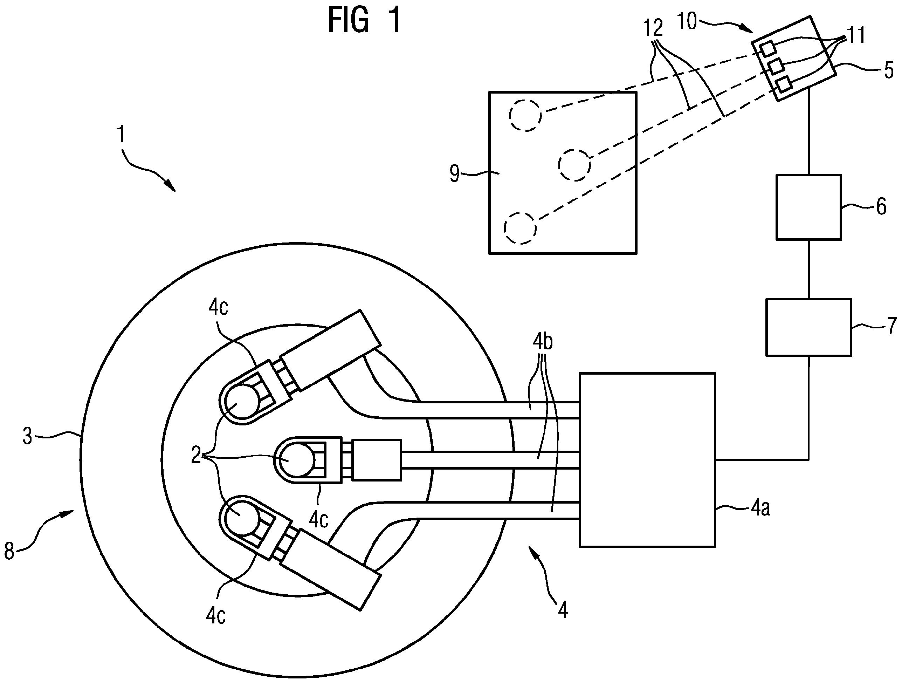

**FIG 1** zeigt ein Beispiel eines Systems 1 zum Kompensieren des Abbrands von drei Elektroden 2 in einem Lichtbogenofen 3 in einer Draufsicht. Die Elektroden 2 werden von einer Haltevorrichtung 4 des Systems 1 jeweils, vorzugsweise wie in FIG 1 dargestellt vertikal, in einer ersten Halteposition gehalten. Unter einem vertikalen Halten ist hierbei ein Halten zu verstehen, bei dem eine Längsachse jeder Elektrode 2 vertikal ausgerichtet ist.

Das System 1 weist neben der Haltevorrichtung 4 auch eine Sensorvorrichtung 5 auf, die dazu eingerichtet ist, jeweils zumindest einen Teil der gehaltenen Elektroden 2 zu erfassen, sowie eine Verarbeitungsvorrichtung 6, die dazu eingerichtet ist, auf Grundlage von beim Erfassen erzeugten Daten, insbesondere für jede der Elektroden 2, eine zweite Halteposition zu ermitteln. Eine Steuerungsvorrichtung 7 des Systems 1 ist dazu eingerichtet, ein Umpositionieren der Haltevorrichtung 4 relativ zu den Elektroden 2 von der ersten Halteposition an die ermittelte zweite Halteposition zu veranlassen, z. B. durch entsprechende Ansteuerung der Haltevorrichtung 4.

Mithilfe der Haltevorrichtung 4 sind die vertikal gehaltenen Elektroden 2, insbesondere die unteren Elektrodenenden, in einem Gefäß 8 des Lichtbogenofens 3 positionierbar, wo sie zumindest teilweise in ein Schmelzgut eingeführt und dieses durch Stromfluss zum Schmelzen bringen können. Die Haltevorrichtung 4 weist zu diesem Zweck eine Hubeinheit 4a auf, mit der die Elektroden 2 vertikal verfahren, d. h. senkrecht zur Zeichenebene angehoben und/oder abgesenkt, werden können.

Mithilfe der Haltevorrichtung 4 sind die Elektroden 2 vorzugsweise auch aus dem Gefäß 8 heraus beweg- und über einer Abstützvorrichtung 9, die vorzugsweise außerhalb neben dem Lichtbogenofen 3, zum Beispiel benachbart zum Gefäß 8, angeordnet ist, positionierbar. Beispielsweise können Tragarme 4b der Haltevorrichtung 4 horizontal, d. h. in der Zeichenebene, verschwenkt werden, bis die Elektroden 2 über der Abstützvorrichtung 9 positioniert sind. Aus dieser, gestrichelt angedeuteten Position heraus können die Elektroden 2 mithilfe der Hubeinheit 4a auf die Abstützvorrichtung 9 abgesenkt werden. Alternativ sind die Elektroden 2 auch durch ein Anheben der Abstützvorrichtung 9, etwa mithilfe einer entsprechenden Hubeinrichtung, abstützbar.

Die Abstützvorrichtung 9 und die Sensorvorrichtung 5 sind dabei vorzugsweise derart relativ zueinander angeordnet, dass die Sensorvorrichtung 5 ein freies bzw. unverstelltes Sichtfeld auf die durch die Abstützvorrichtung 9 abgestützten oder zumindest oberhalb der Abstützvorrichtung 9 positionierten Elektroden 2 hat. Somit kann eine z. B. als Kamera ausgebildete Sensorvorrichtung 5 die Elektroden 2 zumindest teil- bzw. abschnittsweise zuverlässig erfassen.

Im gezeigten Ausführungsbeispiel weist die Sensorvorrichtung 5 anstelle einer Kamera mehrere, nämlich drei, Lasersensoren 11 auf, die jeweils zum Erfassen, insbesondere zum Abtasten bzw. Scannen, zumindest eines Teils bzw. Abschnitts einer der drei Elektroden 2 mithilfe eines Laserstrahls 12 eingerichtet sind. Weist die Sensorvorrichtung 5 bzw. weisen die Lasersensoren 11 keine Mittel zum Verschwenken der Laserstrahlen 12 zum Beispiel in Form von verschwenkbaren Spiegeln auf, ist es denkbar, eine Sensorhubvorrichtung 10 vorzusehen. Mit deren Hilfe sind die Sensorvorrichtung 5 bzw. die Lasersensoren 11 vorzugsweise zumindest vertikal verfahrbar, um die Elektroden 2 jeweils von einem oberen Elektrodenende wenigstens bis zur ersten Halteposition zu erfassen.

Alternativ ist es aber auch möglich, dass zum Erfassen der Bereiche zwischen den oberen Elektrodenenden und den ersten Haltepositionen die Elektroden 2 mithilfe der Haltevorrichtung 4, insbesondere der Hubeinheit 4a, vertikal verfahren werden, bevor sie von der Abstützvorrichtung 9 abgestützt werden.

Hat die Verarbeitungsvorrichtung 6 dann auf Grundlage der beim Erfassen der Elektroden 2 erzeugten Daten die zweite Halteposition ermittelt, kann die Steuerungsvorrichtung 7 die Haltevorrichtung 4 dazu veranlassen, Klemm- oder Greifeinheiten 4c der Haltevorrichtung 4, welche die Elektroden 2 z. B. durch ein Umgreifen halten, zu lockern oder zumindest teilweise zu öffnen, sodass die Elektroden 2 relativ zu den Greifeinheiten 4c beweglich sind. Die Steuerungsvorrichtung 7 kann die Haltevorrichtung 4, insbesondere die Hubeinheit 4a, oder alternativ die Abstützvorrichtung 9 dann dazu veranlassen, vertikal zu verfahren, sodass die Greifeinheiten 4c auf Höhe der zweiten Halteposition positioniert sind.

Anschließend steuert die Steuerungsvorrichtung 7 die Haltevorrichtung 4, insbesondere die Greifeinheiten 4c, vorzugsweise derart an, dass die Greifeinheiten 4c wieder schließen und dadurch die Elektroden 2 fest an der zweiten Halteposition gehalten werden.

Es auch denkbar, die Sensorvorrichtung 5 derart zu positionieren, dass die Elektroden 2 zumindest teil- bzw. abschnittsweise, insbesondere von ihrem oberen Elektrodenende bis zur ersten Halteposition, bereits erfasst werden können, wenn sich die Elektroden 2 noch oberhalb des Lichtbogenofens 3 bzw. des Gefäß 8, insbesondere in einer Betriebsposition, befinden. Dadurch kann die zweite Halteposition ermittelt und gegebenenfalls auch ein Umpositionieren der Haltevorrichtung 4, insbesondere der Greifeinheiten 4c, relativ zu den Elektroden 2 durchgeführt werden, ohne dass die Elektroden 2 horizontal verschwenkt werden müssen, gegebenenfalls sogar ohne dass die Elektroden 2 aus dem Lichtbogenofen 3 bzw. dem Gefäß 8 herausgehoben werden müssen.

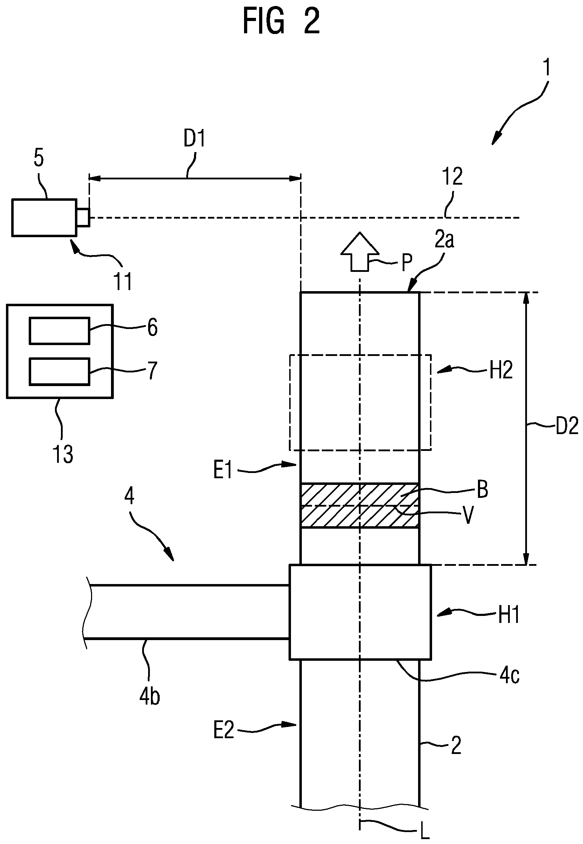

**FIG 2** zeigt ein Beispiel eines Systems 1 zum Kompensieren des Abbrands einer Elektrode 2 in einem Lichtbogenofen in einer Seitenansicht. Das System 1 weist eine Haltevorrichtung 4 zum Halten der Elektrode 2 an einer ersten Halteposition H1 sowie eine Sensorvorrichtung 5 zum Erfassen zumindest eines Teils der gehaltenen Elektrode 2 auf. Das System 1 weist zudem eine Verarbeitungsvorrichtung 6 zum Ermitteln einer zweiten Halteposition H2 auf Grundlage von beim Erfassen erzeugten Daten sowie eine Steuerungsvorrichtung 7 zum Veranlassen eines Umpositionierens der Haltevorrichtung 4 relativ zur Elektrode 2 von der ersten Halteposition H1 an die ermittelte zweite Halteposition H2 auf.

Wie in FIG 2 dargestellt ist, hält die Haltevorrichtung 4 die Elektrode 2 dabei vertikal, d. h. in der Weise, dass eine Längsachse L der Elektrode 2 senkrecht ausgerichtet ist.

Im gezeigten Beispiel sind die Verarbeitungsvorrichtung 6 und die Steuerungsvorrichtung 7 als Softwaremodule ausgebildet, die zum Beispiel von einem Arbeitsmittel 13 ausgeführt werden können. Bei dem Arbeitsmittel 13 kann es sich z. B. um einen Computer, insbesondere um einen Personalcomputer, eine Speicherprogrammierbare Steuerung, eine (anwendungsspezifische) integrierte Schaltung (ASIC) und/oder dergleichen, handeln.

Die Haltevorrichtung 4 umfasst einen Tragarm 4b, an dessen der Elektrode 2 zugewandten Ende eine Greifeinheit 4c, zum Beispiel eine Spannbacke, angeordnet ist. Mithilfe der Greifeinheit 4c kann die Elektrode 2 gegriffen und gehalten werden. Lockert die Greifeinheit 4c ihren Griff, kann die Haltevorrichtung 4 relativ zur Elektrode 2 umpositioniert werden, etwa indem die Elektrode durch eine Abstützvorrichtung (nicht gezeigt) an einem unteren Elektrodenende (nicht gezeigt) ortsfest abgestützt und die Haltevorrichtung 4 angehoben wird.

Die Sensorvorrichtung 5 ist im gezeigten Beispiel als Lasersensor 11 ausgebildet, der einen Laserstrahl 12 emittiert. Mithilfe des Laserstrahls 12 kann die Elektrode 2, insbesondere von ihrem oberen Elektrodenende 2a wenigstens bis zur ersten Halteposition H1 bzw. zur Greifeinheit 4c, abgetastet werden. Zu diesem Zweck kann der Laserstrahl 12 etwa mithilfe eines verschwenkbaren Spiegels verschwenkt werden. Alternativ können Sensorvorrichtung 5 und Elektrode 2 relativ zueinander bewegt werden, etwa indem die Elektrode 2 mithilfe der Haltevorrichtung 4 in Richtung des Laserstrahls 12 angehoben bzw. verfahren wird. Dies ist durch den Pfeil P angedeutet

Die beim Erfassen mithilfe des Lasersensors 11 erzeugten Daten können dann ein Profil des horizontalen Abstands D1 zwischen der Elektrode 2 und der Sensorvorrichtung 5 enthalten. Aus diesem Abstandsprofil kann zum Beispiel ein erster (vertikaler) Abstand D2 zwischen dem oberen Elektrodenende 2a und der ersten Halteposition H1, insbesondere der Haltevorrichtung 4 bzw. der Greifeinheit 4c, abgeleitet werden. Auf Grundlage des Abstandsprofils bzw. des daraus abgeleiteten ersten Abstands D2 kann die zweite Halteposition H2, nämlich zwischen dem oberen Elektrodenende 2a und der ersten Halteposition H1, festgelegt werden.

Dem Ermitteln der zweiten Halteposition H2 wird in bevorzugter Weise auch eine vorgegebene Verbindungsposition V zugrunde gelegt, an der Segmente E1, E2 der Elektrode 2 miteinander verbunden, zum Beispiel miteinander verschraubt, sind. Die zweite Halteposition H2 wird vorzugsweise derart gewählt, dass sie die vorgegebene Verbindungsposition V bzw. einen in FIG 2 schraffiert angedeuteten Verbindungsbereich B um diese Verbindungsposition V herum nicht überlappt bzw. nicht in diesen Verbindungsbereich B hineinfällt. Dadurch kann vermieden werden, dass die Elektrode 2, insbesondere ein zur Verbindung der Elektrodensegmente E1, E2 eingesetztes Verbindungsmittel, beim Halten durch die Haltevorrichtung 4, zum Beispiel durch Ausüben eines Drucks mit der Greifeinheit 4c, beschädigt wird.

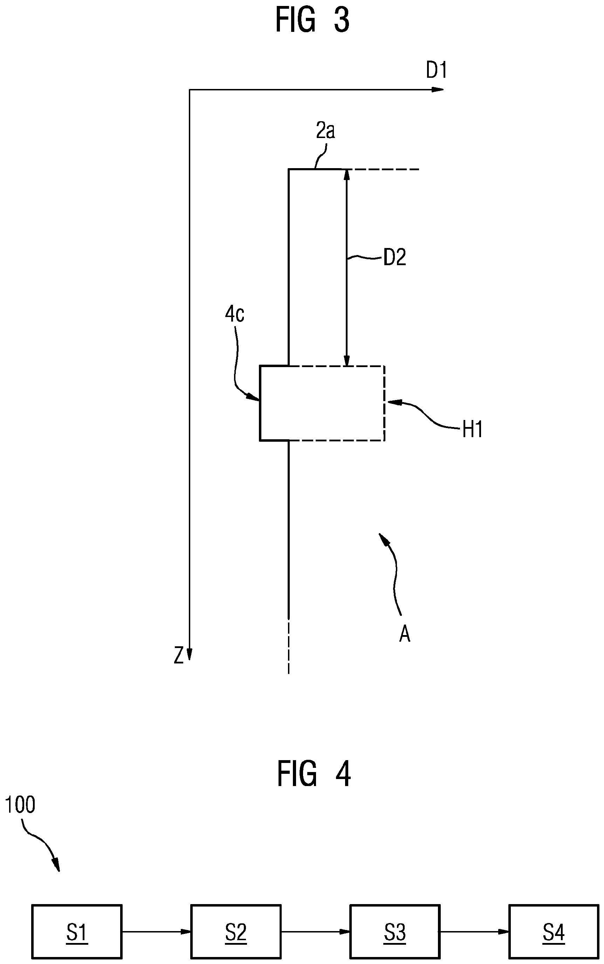

**FIG 3** zeigt ein Beispiel eines Profils A des horizontalen Abstands D1 zwischen einer von einer Haltevorrichtung an einer ersten Halteposition H1 gehaltenen Elektrode einerseits und einer Sensorvorrichtung andererseits, mit der zumindest ein Teil bzw. Abschnitt der Elektrode erfasst wird, zum Beispiel durch Verfahren der Sensorvorrichtung und der Elektrode bzw. der Haltevorrichtung relativ zueinander. Das Profil A wird auch als Abstandsprofil bezeichnet und ergibt sich aus der Auftragung des horizontalen Abstands D1 gegen einen Verfahrweg z von Sensorvorrichtung und Elektrode bzw. Haltevorrichtung relativ zueinander.

Das Abstandsprofil A bildet vorzugsweise die Form bzw. Kontur der gehaltenen Elektrode sowie zumindest eines Teils der Haltevorrichtung ab. Im Abstandsprofil A kann beispielsweise ein oberes Elektrodenende 2a sowie eine die Elektrode umgreifende Greifeinheit 4c erkennbar sein. Aus Lage der Greifeinheit 4c ergibt sich auch die Lage der ersten Halteposition H1 relativ zum oberen Elektrodenende 2a, und damit insbesondere ein erster (vertikaler) Abstand D2 zwischen dem oberen Elektrodenende 2a und der ersten Halteposition H1.

Auf Grundlage des Abstandsprofils A kann dadurch eine zweite Halteposition (siehe FIG 2) ermittelt werden, die vorzugsweise zwischen dem oberen Elektrodenende 2a und der ersten Halteposition H1 liegt. Ist außerdem die Länge von Segmenten bekannt, aus denen die Elektrode zusammengesetzt ist, kann ausgehend vom oberen Elektrodenende 2a auf vorgegebene Verbindungspositionen, an denen die Segmente miteinander verbunden sind, geschlossen werden. Ist der auf Grundlage des Abstandsprofils A ermittelte erste Abstand D2 größer als die vorbekannte Segmentlänge, kann durch Subtraktion der (axialen) Länge eines Verbindungsbereichs um die vorgegebene Verbindungsposition vom ersten Abstand D2 der noch zur Verfügung stehende Elektrodenabschnitt, in dem die Elektrode gehalten werden kann, ermittelt und darauf basierend die zweite Halteposition festgelegt werden.

**FIG 4** zeigt ein Beispiel eines Verfahrens 100 zum Kompensieren des Abbrands einer Elektrode in einem Lichtbogenofen.

In einem Verfahrensschritt S1 wird zumindest ein Teil der von einer Haltevorrichtung an einer ersten Halteposition gehaltenen Elektrode mithilfe einer Sensorvorrichtung erfasst. Zu diesem Zweck kann die Elektrode zumindest abschnittsweise, insbesondere in einem Bereich an ihrem oberen Ende, zum Beispiel mithilfe eines Lasersensors abgetastet bzw. gescannt werden.

Die dabei erzeugten Daten, zum Beispiel ein Profil eines horizontalen Abstands zwischen der Elektrode und/oder der Haltevorrichtung einerseits und der Sensorvorrichtung andererseits, werden in einem zweiten Verfahrensschritt S2 der Ermittlung einer zweiten Halteposition zugrunde gelegt. Zu diesem Zweck kann auf Grundlage der Daten, insbesondere aus dem Abstandsprofil, ein erster, insbesondere vertikaler, Abstand zwischen dem oberen Elektrodenende und der Haltevorrichtung bzw. der ersten Halteposition abgeleitet werden. Dieser derart ermittelte erste Abstand korrespondiert mit einem Abschnitt der Elektrode, in dem ein Halten der Elektrode noch möglich ist.

Gegebenenfalls kann beim Ermitteln der zweiten Halteposition, insbesondere des ersten Abstands, auch eine vorgegebene Verbindungsposition, an der zwei Segmente der Elektrode miteinander verbunden sind, berücksichtigt werden. Zum Beispiel kann eine axiale (wobei sich "axial" auf eine Richtung parallel zu einer Längsachse der Elektrode bezieht) Ausdehnung bzw. Länge eines Verbindungsbereichs um die Verbindungsposition herum vom ermittelten ersten Abstand abgezogen werden, um einen "bereinigten" verbleibenden Abschnitt, in dem ein Halten der Elektrode möglich ist, zu erhalten.

In einem weiteren Verfahrensschritt S3 kann die Elektrode dann mithilfe einer Abstützvorrichtung abgestützt, d. h. darauf abgestellt, werden. Zum Verifizieren des Abstützen bzw. Abstellens kann dabei ein Drucksignal erfasst werden, welches zum Beispiel von einer in der Abstützvorrichtung oder in einer Hydraulik zum Heben und Senken der Abstützvorrichtung verbauten Drucksensorik erzeugt wird. Aus der zum Zeitpunkt des Erfassens des Drucksignals vorliegenden relativen Positionierung von Haltevorrichtung und Abstützvorrichtung, die zum Beispiel mithilfe von Positionsencodern der Haltevorrichtung bzw. der Abstützvorrichtung erfasst werden kann, sowie dem ermittelten ersten Abstand zwischen dem oberem Elektrodenende und der ersten Halteposition bzw. der Haltevorrichtung lässt sich dann auf eine verbleibende Gesamtlänge der Elektrode schließen, die zum Beispiel an einen Benutzer ausgegeben werden kann.

Anschließend kann in einem weiteren Verfahrensschritt S4 die Haltevorrichtung relativ zur Elektrode umpositioniert werden, und zwar in der Weise, dass die Haltevorrichtung die Elektrode nun an der ermittelten zweiten Halteposition hält. Zu diesem Zweck wird vorzugsweise zunächst eine die Elektrode haltende Greifeinheit der Haltevorrichtung, zum Beispiel eine Spannbacke, gelockert. Anschließend können die Haltevorrichtung und die Abstützvorrichtung und damit auch die abgestützte Elektrode relativ zueinander verfahren werden, zum Beispiel indem sich die Haltevorrichtung an der Elektrode entlang, d. h. parallel zur Elektrodenlängsachse, bewegt oder indem die Abstützvorrichtung angehoben wird. Sodann kann die Elektrode mithilfe der Greifeinheit wieder festgehalten, zum Beispiel umfasst, werden.

### Bezugszeichenliste

- 1: System
- 2: Elektrode
- 2a: oberes Elektrodenende
- 3: Lichtbogenofen
- 4: Haltevorrichtung
- 4a: Hubeinheit
- 4b: Tragarm
- 4c: Greifeinheit
- 5: Sensorvorrichtung
- 6: Verarbeitungsvorrichtung
- 7: Steuerungsvorrichtung
- 8: Gefäß
- 9: Abstützvorrichtung
- 10: Sensorhubvorrichtung
- 11: Lasersensor
- 12: Laserstrahl
- 13: Arbeitsmittel

- H1, H2: erste, zweite Halteposition
- D1: horizontaler Abstand
- D2: erster Abstand
- E1, E2: Elektrodensegment
- A: Abstandsprofil
- z: Verfahrweg
- L: Elektrodenlängsachse
- P: Pfeil
- V: Verbindungsposition
- B: Verbindungsbereich

- 100: Verfahren
- S1-S4: Verfahrensschritte

## Patentansprüche

1. Verfahren (100) zum Kompensieren des Abbrands einer Elektrode (2) in einem Lichtbogenofen (3), aufweisend die Schritte:
- Erfassen (S1) zumindest eines Teils der von einer Haltevorrichtung (4) an einer ersten Halteposition (H1) gehaltenen Elektrode (2) mithilfe einer Sensorvorrichtung (5);
- Ermitteln (S2) einer zweiten Halteposition (H2) auf Grundlage von beim Erfassen erzeugten Daten; und
- Umpositionieren (S4) der Haltevorrichtung (4) relativ zur Elektrode (2) von der ersten Halteposition (H1) an die ermittelte zweite Halteposition (H2).

2. Verfahren (100) nach Anspruch 1,
**dadurch gekennzeichnet,**
**dass** auf Grundlage der beim Erfassen erzeugten Daten ein erster Abstand (D2) zwischen einem oberen Elektrodenende (2a) und einer an der Elektrode (2) angebrachten Markierung ermittelt und dem Ermitteln der zweiten Halteposition (H2) zugrunde gelegt wird.

3. Verfahren (100) nach einem der Ansprüche 1 oder 2,
**dadurch gekennzeichnet,**
**dass** auf Grundlage der beim Erfassen erzeugten Daten ein erster Abstand (D2) zwischen einem oberen Elektrodenende (2a) und der ersten Halteposition (H1) ermittelt und dem Ermitteln der zweiten Halteposition (H2) zugrunde gelegt wird.

4. Verfahren (100) nach einem der vorangehenden Ansprüche,
**dadurch gekennzeichnet,**
**dass** die beim Erfassen erzeugten Daten ein Profil (A) eines horizontalen Abstands (D1) zwischen der Elektrode (2) und/oder der Haltevorrichtung (4) einerseits und der Sensorvorrichtung (5) andererseits enthalten und die zweite Halteposition (H2) auf Grundlage des Profils (A) ermittelt wird.

5. Verfahren (100) nach einem der vorangehenden Ansprüche,
**dadurch gekennzeichnet,**
**dass** die zweite Halteposition (H2) auf Grundlage einer vorgegebenen Verbindungsposition (V), an der zwei Segmente (E1, E2) der Elektrode (2) miteinander verbunden sind, ermittelt wird.

6. Verfahren (100) nach einem der vorangehenden Ansprüche,
**dadurch gekennzeichnet,**
**dass** anhand eines Drucksignals verifiziert wird, dass die Elektrode (2) auf einer Abstützvorrichtung (9) abgestützt ist, bevor die Haltevorrichtung (4) von der ersten Halteposition (H1) zur zweiten Halteposition (H2) umpositioniert wird.

7. Verfahren (100) nach einem der vorangehenden Ansprüche,
**dadurch gekennzeichnet,**
**dass** auf Grundlage der beim Erfassen erzeugten Daten eine Restlänge der Elektrode (2) ermittelt und ausgegeben wird (S3).

8. Verfahren (100) nach Anspruch 7,
**dadurch gekennzeichnet,**
**dass** die Restlänge auf Grundlage eines zweiten Abstands zwischen der ersten Halteposition (H1) und der Abstützvorrichtung (9) ermittelt wird.

9. Verfahren (100) nach einem der Ansprüche 7 oder 8,
**dadurch gekennzeichnet,**
**dass** die ermittelte Restlänge der Elektrode (2) nach jedem Schmelzzyklus im Lichtbogenofen (3) geprüft und die zweite Halteposition (H2) in Abhängigkeit eines Ergebnisses der Prüfung ermittelt wird.

10. Verfahren (100) nach einem der vorangehenden Ansprüche,
**dadurch gekennzeichnet,**
**dass** die Elektrode (2) zum Erfassen zumindest eines Teils der Elektrode (2) mithilfe der Haltevorrichtung (4) vertikal verfahren wird.

11. Verfahren (100) nach einem der vorangehenden Ansprüche,
**dadurch gekennzeichnet,**
**dass** die Sensorvorrichtung (5) zum Erfassen des zumindest einen Teils der Elektrode (2) mithilfe einer Abstützvorrichtung (9) vertikal verfahren wird.

12. Verfahren (100) nach einem der vorangehenden Ansprüche,
**dadurch gekennzeichnet,**
**dass** zumindest ein Teil der Elektrode (2) mehrmals hintereinander erfasst und die zweite Halteposition (H2) auf Grundlage einer Mittelung der dabei jeweils erzeugten Daten ermittelt wird.

13. Verfahren (100) nach einem der vorangehenden Ansprüche,
**dadurch gekennzeichnet,**
**dass** beim Erfassen zumindest eines Teils der Elektrode (2) ein Maß für die Verlässlichkeit der beim Erfassen erzeugten Daten ermittelt wird.

14. Verfahren (100) nach einem der vorangehenden Ansprüche,
**dadurch gekennzeichnet,**
**dass** die Sensorvorrichtung (5) eine Kamera oder einen Lasersensor (11) aufweist, mit der bzw. dem zumindest ein Teil der Elektrode (2) erfasst wird.

15. Verfahren (100) nach einem der vorangehenden Ansprüche,
**dadurch gekennzeichnet,**
**dass** mithilfe der Haltevorrichtung (4) eine Anzahl an mehreren Elektroden (2) gehalten wird, und die Sensorvorrichtung (5) eine entsprechende Anzahl an Lasersensoren (11) aufweist, mit denen jeweils zumindest ein Teil einer der Elektroden (2) erfasst wird.

16. System (1) zum Kompensieren des Abbrands einer Elektrode (2) in einem Lichtbogenofen (3), aufweisend:
- eine Haltevorrichtung (4), die dazu eingerichtet ist, der Elektrode (2) an einer ersten Halteposition (H1) zu halten;
- eine Sensorvorrichtung (5), die dazu eingerichtet ist, zumindest einen Teil der gehaltenen Elektrode (2) zu erfassen;
- eine Verarbeitungsvorrichtung (6), die dazu eingerichtet ist, auf Grundlage von beim Erfassen erzeugter Daten eine zweite Halteposition (H2) zu ermitteln; und
- eine Steuerungsvorrichtung (7), die dazu eingerichtet ist, ein Umpositionieren der Haltevorrichtung (4) relativ zur Elektrode (2) von der ersten Halteposition (H1) an die ermittelte zweite Halteposition (H2) zu veranlassen.
